Europäisches Patentamt

European Patent Office

Office européen des brevets

(11) Publication number: **0 424 877 A2**

# EUROPEAN PATENT APPLICATION

(21) Application number: 90120319.0

(22) Date of filing: 23.10.90

(51) Int. Cl.5: **H04Q 3/72**

(30) Priority: 23.10.89 JP 276808/89

(43) Date of publication of application:
02.05.91 Bulletin 91/18

(84) Designated Contracting States:
DE FR SE

(71) Applicant: NEC CORPORATION
7-1, Shiba 5-chome Minato-ku
Tokyo 108-01(JP)

(72) Inventor: Shinmoto, Tetsuo, c/o NEC
Corporation
7-1, Shiba 5-chome, Minato-ku
Tokyo(JP)

(74) Representative: Betten, Jürgen, Dipl.-Ing. et al
Patentanwälte Betten & Resch
Reichenbachstrasse 19
W-8000 München 5(DE)

(54) Malicious call detection method and system.

(57) In a telephone switching system, subscriber line interfaces are connected to a switching network for detecting a hook flash. A three-way trunk circuit operable in a called-party release mode is connected to the network in addition to incoming and outgoing trunks. Individual subscriber data are stored in a main memory indicating the presence or absence of a request from a subscriber for detection of a malicious call and a telephone number of a third-party subscriber. The control unit of the system is responsive to a normal call request for establishing a normal connection in the switching network and clearing it on a calling-party or first-party release basis, and responsive to the detection of a hook flash by a subscriber line interface for identifying it as corresponding to the subscriber from which the request is made. A first connection is then established between the identified subscriber line interface and the three-way trunk, and the normal connection between the identified subscriber line interface and a calling party from which the malicious call has originated is cleared. A second connection is established between the three-way trunk and the malicious calling party and a third connection between the three-way trunk and a subscriber line interface of the third-party subscriber.

## MALICIOUS CALL DETECTION METHOD AND SYSTEM

### BACKGROUND OF THE INVENTION

The present invention relates generally to telephone switching systems, and more specifically to malicious call tracing to permit backward tracing of the origination of a malicious call.

According to a prior art malicious call tracing method, a third-party telephone is usually installed in the premises of a harassed subscriber at which malicious calls are expected to arrive. The third-party telephone is connected in a branched circuit to the telephone of the harassed subscriber for monitoring and recording the voice of a caller if the call is recognized as having a malignant intent. When a malicious call arrives, the maintenance personnel in the public switched telephone network starts tracing the connections through the network in an attempt to identify the suspected calling party.

Since the public switched telephone network operates in what is called a "calling-party or first-party release" mode, the call tracing must be completed before the caller goes on-hook. This is particularly true if the malicious call has originated from a distance switching exchange through one or more intermediate exchanges. In addition, the time taken to install a monitoring telephone must be short as possible in light of the impending circumstance. However, the existing telephone circuit is not designed to easily accommodate a branch connection.

### SUMMARY OF THE INVENTION

It is therefore an object of the present invention to provide a telephone switching system which allows malicious call tracing to continue even after a malicious calling party goes on-hook and further allows quick installation of a monitoring telephone.

According to the present invention, there is provided a telephone switching system which comprises a switching network, and a plurality of subscriber line interfaces connected to the switching network, each of the subscriber line interfaces being capable of detecting a hook flash. A three-way trunk circuit operable in a called-party release mode is connected to the switching network in addition to a plurality of trunk circuits. A memory is provided for storing individual subscriber data indicating the presence or absence of a request from a subscriber for detection of a malicious call and a telephone number of a third-party subscriber associated with the request. The control unit of the system is responsive to a normal call request for establishing a normal connection in the switching network and clearing the normal connection on a calling-party or first-party release basis, and responsive to the detection of a hook flash by a subscriber line interface for identifying it as corresponding to the subscriber requesting the detection of the malicious call and establishing a first connection between the identified subscriber line interface and the three-way trunk circuit while clearing the normal connection established between the identified subscriber line interface and a calling party from which the malicious call has originated, a second connection between the three-way trunk circuit and the malicious calling party and a third connection between the three-way trunk circuit and a subscriber line interface of the third-party subscriber.

### BRIEF DESCRIPTION OF THE DRAWINGS

The present invention will be described in further detail with reference to the accompanying drawings, in which:

Fig. 1 is a block diagram of a digital telephone switching system embodying the present invention;

Figs. 2A to 2D are schematic illustrations of switched connections;

Fig. 3 is a flowchart describing the operation of the central processor of Fig. 1 during a malicious call tracing routine;

Figs. 4A and 4B are illustrations of details of the connections between subscriber line circuits and a three-way trunk circuit.

### DETAILED DESCRIPTION

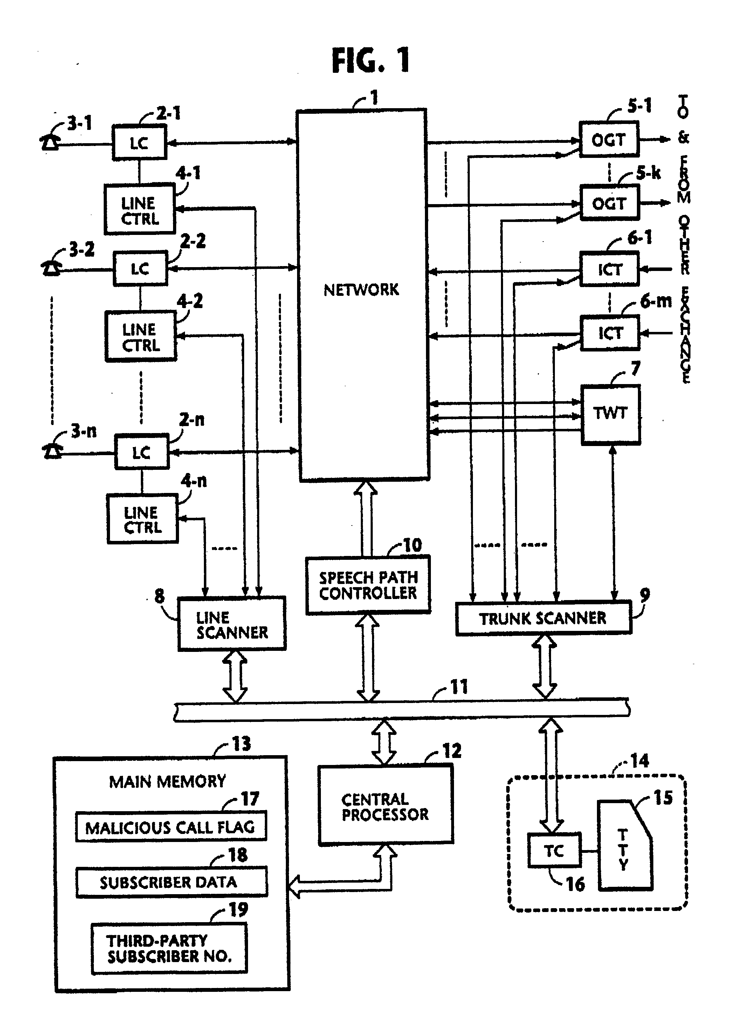

Referring now to Fig. 1, there is shown a digital telephone switching system according to the present invention. The system comprises a switching network 1 having line terminals to which subscriber line circuits 2-1~ 2-n are connected. Line circuits 2-1, 2-2 .... 2-n respectively serve as interfaces between associated subscriber telephones 3-1, 3-2 .... 3-n and the network 1. Local line controllers 4-1 ~ 4-n are associated respectively with the line circuits to provide the various control functions including the function of detecting a momentary depression of the switchhook, or "hook flash" of the associated subscriber telephone to alert switching equipment. Network 1 has trunk terminals to which outgoing trunk circuits 5-1 ~ 5-k, incoming trunk circuits 6-1 ~ 6-m and a three-way trunk circuit 7 are terminated. A line scanner 8 is connected to line controllers 4 to detect the origination of a call and monitor their busy/idle status. Likewise, a trunk scanner 9 is associated with all trunk circuits to monitor their operating status. A speech path controller 10 is associated with the network to establish a connection between a line terminal and a trunk terminal in accordance with a switching control signal supplied via bus 11 from a central processor 12 which derives it from information supplied from the scanners 8 and 9 as well as from information stored in a main memory 13. A maintenance center 14 is provided which includes a teletypewriter 15 and a controller 16 which couples the teletypewriter to processor 12 via the common bus 11.

According to the present invention, a request for malicious call tracing is issued from a subscriber should a need arises. This request is to be first acknowledged by the telephone company. The acknowledged request is communicated to the maintenance center 14 of the telephone exchange serving the requesting subscriber. On receiving this request, the maintainance personnel at the center 14 enters necessary information through the teletypewriter 15 into main memory 13 via the central processor 12. The information stored in main memory 13 includes a malicious call flag as indicated at 17 which indicates the presence or absence of a request for detecting a malicious call, a "1" or "0" in the malicious call request field of a subscriber data field 18 of each subscriber indicating respectively the presence and absence of the request, and a telephone number in a third-party telephone number field 19. This telephone number is that of a telephone which is to be installed in the premises of the requesting subscriber or in any other suitable location for purposes of monitoring and recording malicious calls.

Three-way trunk circuit 7 operates in "a called-party release" mode so that it holds an established connection until the called party goes on-hook, while the other trunk circuits and the subscriber line circuits operate in a conventional "calling-party or first-party release" mode.

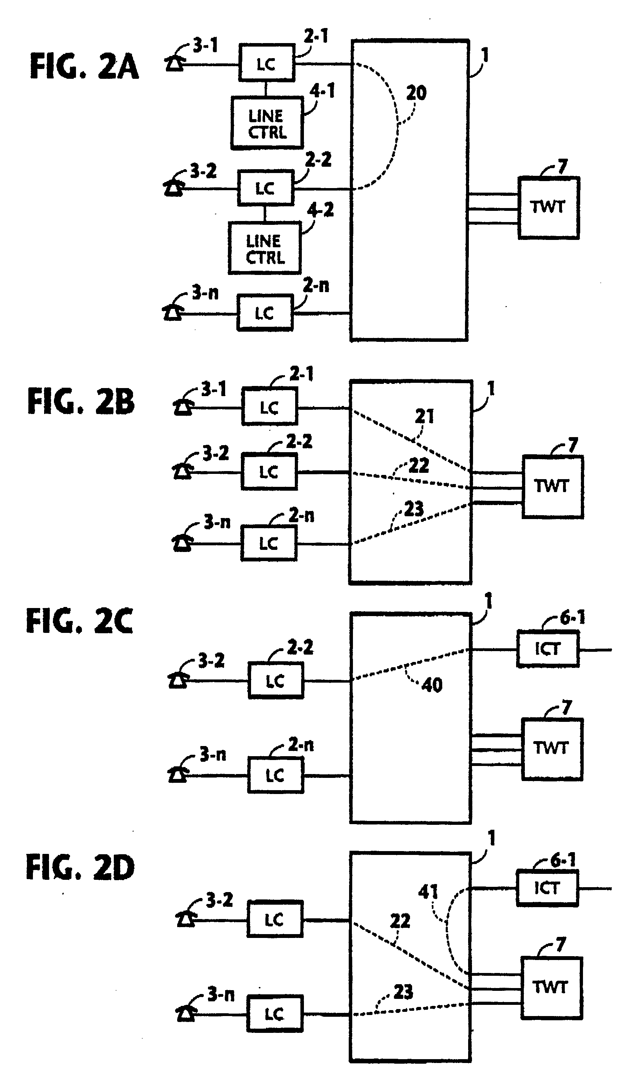

In a well known manner, central processor 12 collects data from scanners 8 and 9 to conduct a search for an idle outgoing trunk or identify a called line circuit and directs speech path controller 10 to establish an appropriate connection through the network. Assume that a malicious call is originated from telephone 3-1 and terminated at telephone 3-2, and telephone 3-n serves as the third-party telephone. Central processor 12 obtains data sent from telephone 3-1 through line scanner 8 and establishes a connection in network 1 between line circuits 2-1 and 2-2 as indicated at 20 in Fig. 2A. The call status of this connection is monitored by line controller 4-1 and held until the calling-party telephone 3-1 goes on-hook. When the called subscriber recognizes that the call is from the suspected caller, the called party momentarily depresses the switchhook of his telephone. The hook flash is detected by line controller 4-2 and this fact is communicated through line scanner 8 to central processor 12. Central processor 12 now leaves the main routine and enters a malicious call tracing routine.

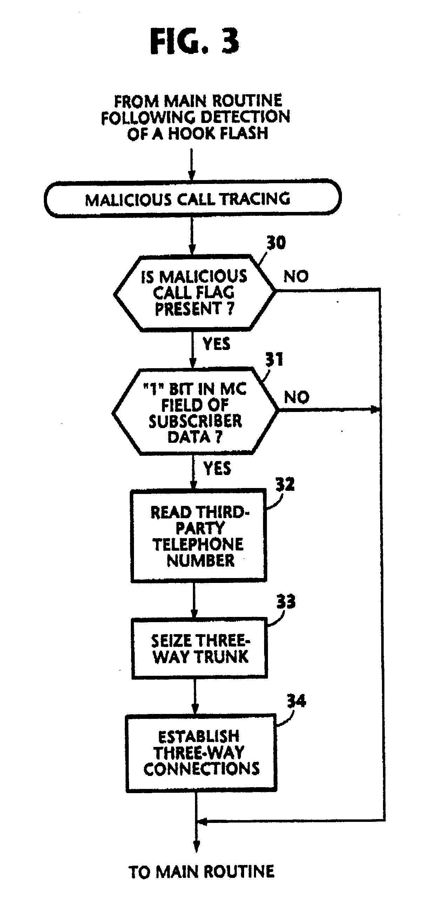

As shown in Fig. 3, the malicious call tracing routine begins with decision step 30 which checks for the presence of a malicious call flag in main memory 13. If the answer is affirmative, exit is to step 31 to check for the presence of a "1" bit in the malicious call bit position of subscriber data associated with the called party. If the answer is affirmative, exit then is to step 32 to read out a third-party telephone number from memory 13 associated with the malicious call request. Control proceeds to step 33 to seize the three-way trunk circuit 7 and goes to step 34 to cause speech path controller 10 to establish a connection 21 between line circuit 2-1 and a first terminal of trunk 7, a connection 22 between line circuit 2-2 and a second terminal of trunk 7, and a connection 23 between line circuit 2-n and a third terminal of the trunk, and clears the connection 20, as indicated in Fig. 2B. Following step 34, control returns to the main routine. If the decision in step 30 or 31 is negative, control instantly returns to the main routine. Since hook flashes often occur inadvertently, the provision of the malicious call flag and step 30 for detecting it provides an advantage in that it permits central processor 12 to rapidly return to the main routine when such a hook flash occurs without making a time-consuming search for individual subscriber data.

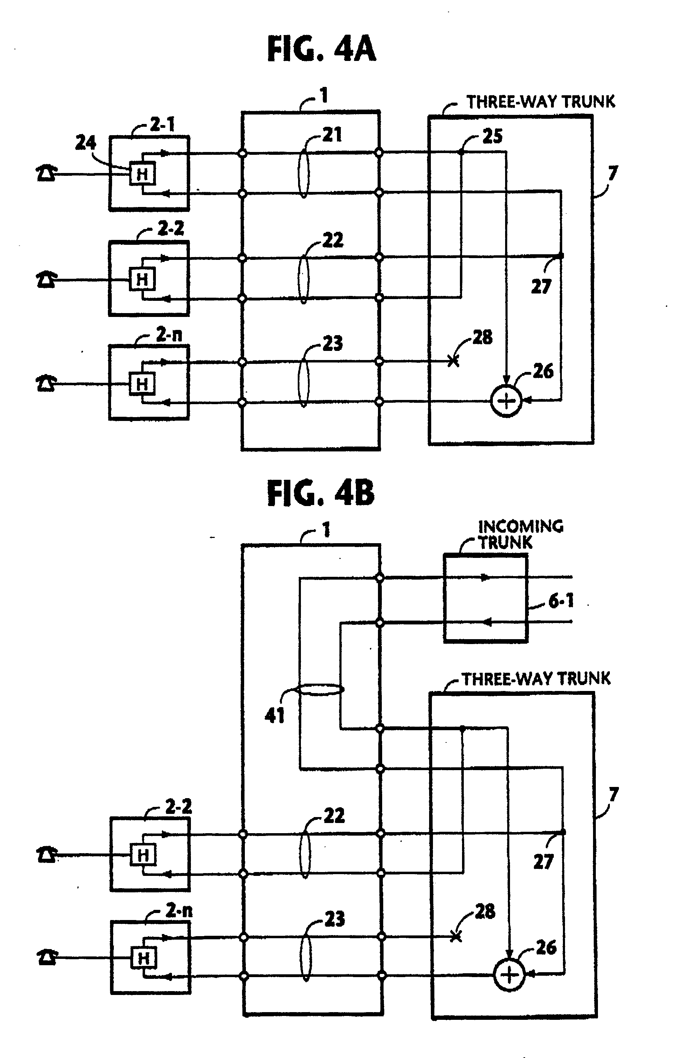

Details of three-way trunk circuit 7 are shown in Fig. 4A in relation to the line circuits to which it is connected. Each line circuit has a hybrid circuit 24 which provides conversion between the two-wire subscriber loop and the forward and return signal paths of four-wire connection. The forward (rightward direction) signal path of connection 21 is connected to the return signal path of connection 22 at a circuit junction 25 which leads to a first input of a summing circuit 26, and the forward signal path of connection 22 is connected to the return signal path of connection 21 at a circuit junction 27 which leads to a second input of summing circuit 26. The output of summing circuit 26 is connected to the return signal path of connection 23. To prevent voices from the third-party telephone from being heard by the malicious calling party, the forward signal path of connection 23 is disconnected as at 28.

When the call through the three-way trunk 7 is in progress, the personnel at the maintenance center 14 conducts a back tracing search through the network to identify the malicious calling party. Since three-way trunk circuit 7 can hold the connections until the called party goes on-hook as described above, the present invention eliminates the possibility of failures in identifying the malicious calling party which would otherwise occur by the on-hook of the calling party.

If the malicious call is from a distant exchange, a connection 40 will be first established from incoming trunk circuit 6-1, for example, to line circuit 2-2, as shown in Fig. 2C. Recognizing that the call is malicious, the called-party signals a hook flash. In response to the hook flash, the central processor 12 enters the malicious call tracing routine and establishes a connection 41 between incoming trunk 6-1 and the first input of three-way trunk 7, and the connections 22 and 23 as described above. As shown in Fig. 4B, the forward and return signal paths of connection 41 are connected to junctions 25 and 27 of the three-way trunk 7, respectively, in a manner similar to the connections associated with line circuit 2-1, while clearing the connection 40.

The foregoing description shows only one preferred embodiment of the present invention. Various modifications are apparent to those skilled in the art without departing from the scope of the present invention which is only limited by the appended claims. Therefore, the embodiment shown and described is only illustrative, not restrictive.

## Claims

1. A telephone switching system comprising:
a switching network;
a plurality of subscriber line interfaces connected to said switching network, each of said subscriber line interfaces being capable of detecting a hook flash;
a plurality of trunk circuits connected between said switching network and a distant switching exchange;
a three-way trunk circuit operable in a called-party release mode and connected to said switching network;
memory means for storing individual subscriber data indicating the presence or absence of a request from a subscriber for detection of a malicious call and a telephone number of a third-party subscriber associated with said request; and
control means responsive to a normal call request for establishing a normal connection in said switching network and clearing said normal connection on a calling-party or first-party release basis, and responsive to the detection of a hook flash by a subscriber line interface for identifying it as corresponding to the subscriber requesting the detection of the malicious call and establishing a first connection between the identified subscriber line interface and said three-way trunk circuit while clearing the normal connection established between said identified subscriber line interface and a calling party from which said malicious call has originated, a second connection between said three-way trunk circuit and said malicious calling party and a third connection between said three-way trunk circuit and a subscriber line interface of said thirdparty subscriber.

2. A telephone switching system as claimed in claim 1, wherein said memory means further stores a flag indicating the presence or absence of said request, and wherein said control means is responsive to the detection of said hook flash for detecting a match or mismatch between the contents of the stored flag and the contents of the stored subscriber data, and identifying said subscriber line interface by which said hook flash is detected as corresponding to the subscriber requesting the detection of the malicious call upon detection of said match and ignoring said hook flash upon detection of said mismatch.

3. A telephone switching system as claimed in claim 2, wherein said control means ignores said hook flash if said flag stored in said memory means is indicative of the absence of said request.

4. A telephone switching system as claimed in claim 1, wherein said third connection is a one-way connection not allowing said third-party subscriber to send voice signals to said first and second connections.

5. A telephone switching system as claimed in claim 2, further comprising a maintenance center for storing an indication of said request into said flag as well as into said subscriber data of said subscriber.

6. A method for establishing switched telephone connections, comprising the steps of:
a) making a registration of a subscriber issuing a request for detection of a malicious call into a memory and a third-party subscriber associated with said request into said memory;
b) establishing a normal connection through a switching network between a calling-party subscriber and a called-party subscriber which has issued said request;
c) detecting a hook flash from said called-party subscriber;
d) making a search through said memory and identifying said called-party subscriber as corresponding to the registered subscriber if there is a match therebetween; and

e) establishing three-way connections between said calling-party subscriber, the identified called-party subscriber and said third-party subscriber, clearing said normal connection, and holding said three-way connections until said identified called-party subscriber goes on-hook.

7. A method as claimed in claim 6, wherein the step (a) comprises making a registration of a flag indicating the presence of absence of said request, and wherein the step (d) comprises detecting a match or mismatch between the contents of the flag and the contents of the subscriber data, and identifying said called-party subscriber as corresponding to the registered subscriber upon detection of said match and ignoring said hook flash upon detection of said mismatch.

8. A method as claimed in claim 7, wherein the step (d) ignores said hook flash if said flag is indicative of the absence of said request.

9. A method as claimed in claim 6, wherein said third-party subscriber is not allowed to send voice signals to said calling- and called-party subscribers.

FIG. 1

FIG. 2A

FIG. 2B

FIG. 2C

FIG. 2D

# FIG. 3

FROM MAIN ROUTINE
FOLLOWING DETECTION
OF A HOOK FLASH

MALICIOUS CALL TRACING

IS MALICIOUS
CALL FLAG
PRESENT ? — 30 — NO

YES

"1" BIT IN MC
FIELD OF
SUBSCRIBER
DATA ? — 31 — NO

YES

READ THIRD-
PARTY
TELEPHONE
NUMBER — 32

SEIZE THREE-
WAY TRUNK — 33

ESTABLISH
THREE-WAY
CONNECTIONS — 34

TO MAIN ROUTINE

8

# FIG. 4A

THREE-WAY TRUNK

# FIG. 4B

INCOMING TRUNK

THREE-WAY TRUNK